# EUROPEAN PATENT SPECIFICATION

(11) **EP 4 358 263 B1**
(45) Date of publication and mention of the grant of the patent: **31.12.2025**
(21) Application number: 23824053.5
(22) Date of filing: 24.03.2023
(51) Int. Cl.: H01M 50/342, H01M 50/358, H01M 50/204

(54) **GAS VENTING DEVICE, AND BATTERY MODULE AND BATTERY PACK INCLUDING SAME**
ENTGASUNGSVORRICHTUNG UND BATTERIEMODUL UND BATTERIEPACK DAMIT
DISPOSITIF DE DISPERSION DU GAZ DANS L'ATMOSPHÈRE, ET MODULE DE BATTERIE ET BLOC-BATTERIE LE COMPRENANT

(30) Priority: 15.06.2022 KR 20220072868
(43) Date of publication of application: 24.04.2024
(73) Proprietor: LG ENERGY SOLUTION, LTD., Seoul 07335 (KR)
(72) Inventor: KIM, Doo Seung, Daejeon 34122 (KR); SIM, Il Suk, Daejeon 34122 (KR); CHOO, Yeon Chul, Daejeon 34122 (KR)
(74) Representative: Plasseraud IP
(86) International application number: PCT/KR2023/003985
(87) International publication number: WO 2023/243823

(56) References cited:
- CN-U- 205 790 146
- DE-A1- 102013 210 335
- JP-A- 2013 114 991
- JP-A- 2013 187 530
- KR-A- 20140 016 794
- KR-A- 20160 112 768
- KR-A- 20210 091 514
- SINGH JAGMIT, ZERPA LUIS E., PARTINGTON BENJAMIN, GAMBOA JOSE: "Effect of nozzle geometry on critical-subcritical flow transitions", HELIYON, ELSEVIER LTD, GB, vol. 5, no. 2, 20 February 2019 (2019-02-20), GB , pages e01273, XP093117629, ISSN: 2405-8440, DOI: 10.1016/j.heliyon.2019.e01273

## Description

### [Technical Field]

The present invention relates to a gas venting device for discharging gases inside a battery module or a battery pack.

In addition, the present invention relates to a battery module and a battery pack including the gas venting device.

This application claims the benefit of priority based on Korean Patent Application No. 10-2022-0072868 filed on June 15, 2022.

### [Background Technology of the Invention]

Battery packs applied to electric vehicles and the like have a structure in which a plurality of battery modules including a plurality of secondary batteries are connected in series or in parallel to obtain high output. In addition, the secondary batteries can be repeatedly charged and discharged by an electrochemical reaction between components including positive electrode and negative electrode current collectors, separators, active materials, electrolyte, and the like.

A secondary battery may generate gas from the inside thereof at any time while repeatedly charged and discharged, which is called venting gas. For example, when an overcurrent flows, a temperature of the secondary battery inside of the battery pack is rapidly increased. Such a rapid increase in temperature may cause a decomposition reaction of an electrolyte to generate gas. When the gas is generated from the secondary battery inside the battery pack, the gas may be collected inside the pack and the battery pack may explode, or the gas may be introduced into the interior of a vehicle or the like through a cooling duct of the battery pack or the like. Accordingly, a venting device capable of reducing the pressure in a battery pack by discharging gas inside the battery pack to the outside is provided in the battery pack.

Generally, a venting device has a structure in which a venting disk the can rupture according to internal pressure is inserted between an inlet through which gas inside a battery module or a battery pack is introduced and an outlet through which the gas is discharge.

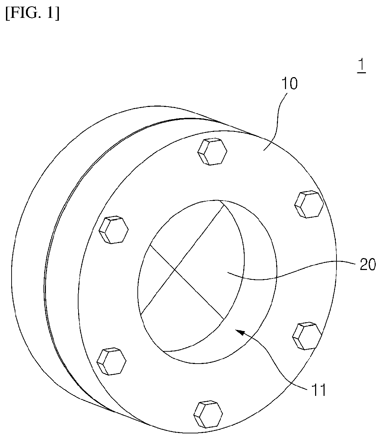

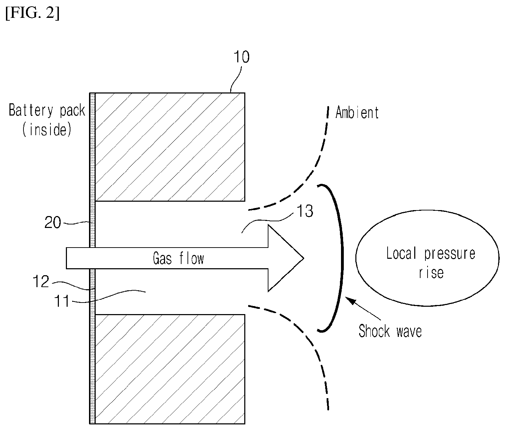

FIG. 1 is a perspective view illustrating an example of a conventional gas venting device, and FIG. 2 is a schematic view illustrating a gas flow situation at an outlet part of a conventional gas venting device.

As shown, the conventional gas venting device 1 has the advantage of being easy to design device, since the gas discharge flow path 11 of the bracket 10 connected to the venting disk 20 is simply designed as a cylinder.

However, as the conventional gas venting device 1 has a cylindrical-shaped structure simply connected to an inlet 12 and an outlet 13 of gas, the pressure between the inlet and outlet is not large, thereby limits the flow amount of gas that can be discharged.

In addition, when a large amount of gas is generated, a so-called choking phenomenon which causes the flow to stagnate can occur at the outlet of the gas discharge flow path 11, thereby increasing the flow instability. To avoid such choking phenomenon, it is necessary to select a venting disk that can rupture at a low pressure. However, considering the rupture pressure tolerances, it can be difficult to ensure component reliability of the venting disk in this case.

In addition, as shown in FIG. 2, in a gas venting device of a cylindrical flow path 11, there is a problem that a strong shock wave is generated near the outlet due to an unstable flow at the outlet part and a sudden pressure change at the outlet, which impairs safety.

Furthermore, at the downstream of the shock wave, there is a local pressure increase, which causes the outlet pressure to rise again. This in turn reduces the inlet-outlet pressure difference, potentially reducing the rate of discharge.
[Related Art Document] Korean Laid-Open Patent No. 10-2018-0039986
German Patent Application No. 10 2013 210335
Japanese Patent Application No. 2013 114991

### [Description of the Invention]

### [Technical Problem]

The present invention is directed to solve the above problems, and aims to provide a gas venting device, which can discharge more flow per hour with a venting disk with the same area, and a battery module and battery pack including the same.

In addition, it aims to provide a gas venting device that can increase the rupture pressure of the venting disk by solving the choking phenomenon at the outlet.

In addition, it aims to provide a gas venting device that prevents the generation of shock waves at the outlet of the flow path to increase safety and further improve flow stability.

Additionally, the present invention aims to provide a gas venting device in which a venting disk is installed on the outlet side of the flow path to prevent contamination of the flow path due to incorporation of disk fragments when the venting disk ruptures, and to develop the flow of gas in the flow path to the maximum extent possible to stably discharge the discharging gas.

### [Technical Solution]

A gas venting device of the present invention for solving the above problems includes: a hollow bracket member with a gas discharge flow path; and a venting disk coupled to the bracket member to shield the gas discharge flow path, and configured to rupture when a predetermined pressure is applied to the venting disk; wherein the gas discharge flow path comprises: a first flow path that continuously or sequentially decreases in flow path cross-section along the gas discharge direction, and a second flow path formed consecutively with the first flow path and having a flow path cross-section that increases continuously or sequentially along the gas discharge direction, wherein the venting disk is installed on the outlet side of the gas discharge flow path.

The bracket member has a through hole, and includes a discharge guide inserted within the through hole and having a gas discharge flow path formed therethrough, wherein the venting disk is coupled to the bracket member and the discharge guide at the outlet side of the gas discharge flow path of the discharge guide to shield the gas discharge flow path.

The first and second flow paths may have the same or different lengths.

In a specific example, the cross-sectional profiles of the both side portions of the first flow path may be formed in a tapered shape approaching each other along the gas discharge direction, and the cross-sectional profiles of the both side portions of the second flow path may be formed in a tapered shape moving away from each other along the gas discharge direction.

A slope of the tapered shape of the first flow path and a slope of the tapered shape of the second flow path may be the same or different.

In addition, the cross-sectional profiles of the both side portions of the first and second flow paths may be formed in a linear or curved tapered shape.

In this case, the first flow path may have a first truncated conical shape in which the cross-sectional profiles of the both side portions are formed in a linear or curved tapered shape, and the second flow path may have a second truncated conical shape in which the cross-sectional profiles of the both side portions are formed in a linear or curved tapered shape.

As another example, the first flow path may have a first truncated pyramid shape in which the cross-sectional profiles of the both side portions are formed in a tapered shape, and the second flow path may have a second truncated pyramid shape in which the cross-sectional profiles of the both side portions are formed in a tapered shape.

Here, the first truncated pyramid shape and the second truncated pyramid shape may have a truncated square pyramid shape having a trapezoidal cross-sectional profile.
In addition, a flow path having a linear cross-sectional profile on both side portions may be connected to the inlet side of the first flow path.

A fastening portion may be formed on the outer peripheral surface of the discharge guide for fastening the discharge guide to the bracket member.

Additionally, the bracket member and the discharge guide may be coupled together by a screw fastening method.

Meanwhile, the venting disk includes a disk outer peripheral portion coupled to the bracket member; and
a disk inner peripheral portion formed in one piece with the disk outer peripheral portion, shielding the gas discharge flow path, and rupturing when a predetermined pressure is applied to the disk inner peripheral portion; wherein a notch is formed in the disk inner peripheral portion to rupture when the predetermined pressure is applied to the disk inner peripheral portion.

The present invention also provides a battery module including the gas venting device.

The battery module includes a plurality of secondary batteries; and a module frame on which the plurality of secondary batteries are mounted, wherein the above-described gas venting device may be coupled to one side of the module frame.

The present invention also provides a battery pack including the gas venting device.

The battery pack includes at least one battery module having a plurality of secondary batteries; and
a battery pack case in which the battery module is mounted; wherein the above-described gas venting device may be coupled to one side of the battery pack case.

### [Advantageous Effects]

The gas venting device according to the present invention and the battery module or battery pack including it can improve the safety of the battery module and battery pack by discharging more flow per hour even when using a venting disk with the same area.

In addition, by having a unique gas discharge flow path shape, relatively stable gas flow at the outlet can be achieved while solving choking phenomenon even when a large amount of venting gas is generated. In addition, it has the advantage that the rupture pressure of the venting disk can be set to be relatively high, as the inlet and outlet pressure difference can be made large while avoiding choking phenomenon.

Moreover, the discharged gas is discharged at high velocities, and such high-velocity inertia of the flow can prevent shock waves far from the exit from being generated, or shock waves from occurring at all.

Furthermore, the present invention installs a venting disk on the outlet side of the flow path to prevent contamination of the flow path by disk fragments when the venting disk ruptures, and to maximize the flow of gas in the flow path so that the discharging gas can be discharged stably.

Accordingly, the gas venting device of the present invention, and the battery module and battery pack including it, have the advantage of significantly improving safety in the case of an event such as heat propagation.

### [Brief Description of the Diagrams]

FIG. 1 is a perspective view of an example of a conventional gas venting device.
FIG. 2 is a schematic illustration of a gas flow situation at the outlet of a conventional gas venting device.
FIG. 3 is a diagram illustrating an exemplary embodiment of a gas venting device.
FIG. 4 is a schematic illustration of a gas flow situation at the outlet of a gas venting device.
FIG. 5 is a diagram illustrating the shape of a flow path of a gas venting device according to an exemplary embodiment.
FIG. 6 is a diagram illustrating the shape of a flow path of a gas venting device according to another exemplary embodiment.
FIG. 7 is a diagram illustrating the shape of a flow path of a gas venting device according to yet another exemplary embodiment.
FIG. 8 is a diagram illustrating a gas venting device according to an exemplary embodiment of the present invention.
FIG. 9 is a diagram illustrating a fastening structure of a gas venting device of the present invention.
FIG. 10 is a perspective view of the gas venting device of FIG. 9.
FIG. 11 is a schematic illustration of the shape of a venting disk according to the present invention.
FIG. 12 is a schematic illustration of a coupling structure of a gas venting device in a battery module according to an exemplary embodiment of the present invention.

### (Reference numerals)

- 100:: GAS VENTING DEVICE
- 110:: BRACKET MEMBER
- 111:: GAS DISCHARGE FLOW PATH
- 111A:: FIRST FLOW PATH
- 111B:: SECOND FLOW PATH
- 111C:: FIRST TRUNCATED CONE
- 111D:: SECOND TRUNCATED CONE
- 111E:: FIRST TRUNCATED PYRAMID
- 111F:: SECOND TRUNCATED PYRAMID
- 112:: INLET
- 113:: OUTLET
- T:: THROAT PORTION
- 115:: LINEAR FLOW PATH
- 116:: THREAD
- 120:: VENTING DISK
- 121:: DISK OUTER PERIPHERAL PORTION
- 122:: DISK INNER PERIPHERAL PORTION
- 123:: BOLT THROUGH HOLE
- 124:: NOTCH
- 130:: DISCHARGE GUIDE
- 131:: GAS DISCHARGE FLOW PATH
- 131A:: FIRST FLOW PATH
- 131B:: SECOND FLOW PATH
- 131C:: FIRST TRUNCATED CONE
- 131D:: SECOND TRUNCATED CONE
- 132:: INLET
- 133:: OUTLET
- 135:: FASTENING PORTION
- 136:: THREAD
- 140:: FASTENING MEMBER
- 200:: BATTERY MODULE
- 210:: MODULE FRAME

### [Best Mode for Carrying Out the Invention]

A gas venting device of the present invention, includes: a hollow bracket member with a gas discharge flow path; and a venting disk coupled to the bracket member to shield the gas discharge flow path, and configured to rupture when a predetermined pressure is applied; wherein the gas discharge flow path includes: a first flow path that continuously or sequentially decreases in flow path cross-section along the gas discharge direction, and a second flow path formed consecutively with the first flow path and having a flow path cross-section that increases continuously or sequentially along the gas discharge direction, wherein the venting disk is installed on the outlet side of the gas discharge flow path.

The present invention also provides a battery module including the gas venting device.

The battery module includes a plurality of secondary batteries; and a module frame on which the secondary battery is mounted, wherein the above-mentioned gas venting device may be coupled to one side of the module frame.

The present invention also provides a battery pack including the gas venting device.

The battery pack includes at least one battery module having a plurality of secondary batteries; and a battery pack case in which the battery module is mounted; wherein the above-mentioned gas venting device may be coupled to one side of the battery pack case.

### [Mode for Carrying Out the Invention]

Hereinafter, the present invention will be described in detail with reference to the accompanying drawings. Terms and words used in this specification and claims should not be construed as being limited to commonly used meanings or meanings in dictionaries and should be construed with meanings and concepts which are consistent with the technological scope of the present invention based on the principle that the inventors have appropriately defined concepts of terms in order to describe the present invention in the best way.

It should be understood that the terms "comprise," "comprising," "include," and/or "including," when used herein, specify the presence of stated features, integers, steps, operations, elements, parts, and/or combinations thereof, but do not preclude the presence or addition of one or more other features, integers, steps, operations, elements, parts, and/or combinations thereof. In addition, when a layer, film, region, or plate is referred to as being "formed on" another element, it includes a case in which the layer, film, region, or plate is formed directly on an element and a case in which the layer, film, region, or plate is formed on the element with another element interposed therebetween. In contrast, when a layer, film, region, or plate is referred to as being "formed below" an element, it includes a case in which the layer, film, region, or plate is formed directly below the element and a case in which the layer, film, region, or plate is formed below the element with another element interposed therebetween. In addition, in the present invention, when a member is referred to as being located "on" another member, it includes a case in which a member is disposed above another member and a case in which a member is disposed below another member.

Hereinafter, the present invention will be described in detail.

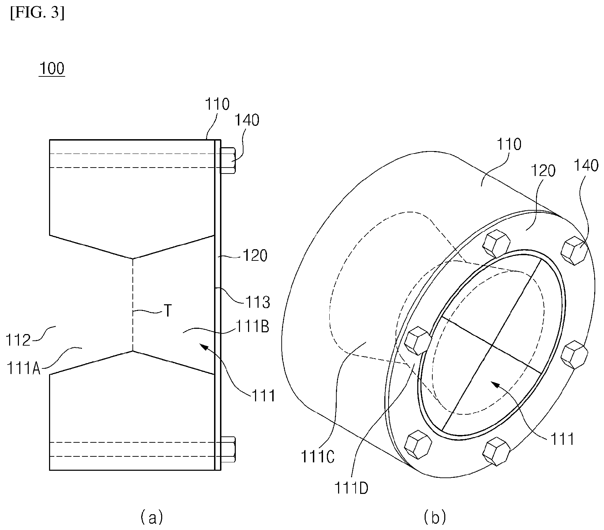

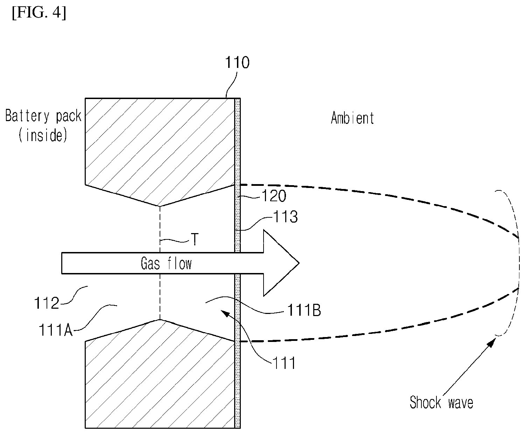

FIG. 3 is a diagram illustrating an exemplary embodiment of a gas venting device, and FIG. 4 is a schematic illustration of a gas flow situation at the outlet of a gas venting device. FIG. 3(a) is a schematic cross-sectional view of the gas venting device, and FIG. 3(b) is a schematic perspective view of the gas venting device.

A gas venting device 100 includes: a hollow bracket member 110 with a gas discharge flow path 111; and a venting disk 120 coupled to the bracket member 110 to shield the gas discharge flow path 111, and configured to rupture when a predetermined pressure is applied; wherein the gas discharge flow path 111 includes: a first flow path 111A that continuously or sequentially decreases in flow path cross-section along the gas discharge direction, and a second flow path 111B formed consecutively with the first flow path and having a flow path cross-section that increases continuously or sequentially along the gas discharge direction, wherein the venting disk 120 is installed on the outlet 113 side of the gas discharge flow path 111.

Referring to FIG. 3, a gas venting device 100 includes a hollow bracket member 110 having a gas discharge flow path 111; and a venting disk 120 coupled to the bracket member 110.
The bracket member 110 may be hollow, such that the hollow (through hole) space may directly form a gas discharge flow path 111, or, as will be described later, another member with a gas discharge flow path (e.g., a discharge guide) may be positioned within the hollow space. In the embodiment of FIG. 3, the bracket member 110 has a through hole at its approximate center, wherein the through hole forms a gas discharge flow path 111.

The bracket member 110 is provided with a venting disk 120 that shields the gas discharge flow path 111. The venting disk 120 is formed of a rupturable material such that it ruptures when a predetermined pressure is applied. For example, it may be formed of a rupturable metal or plastic material. Alternatively, it may be made of a polymeric material that can be thinned, such as vinyl, film, or the like. Meanwhile, the venting disk 120 may be provided with a notch in the area corresponding to the flow path to facilitate rupturing.

The predetermined pressure may be determined by considering the design of the battery cells within the battery module or battery pack and the degree of safety required. For example, the venting disk 120 may be designed to rupture in the event of a flame within the module or pack or in the event that it exceeds a set high temperature and pressure. Alternatively, for increased safety, the venting disk 120 may be designed to rupture at a relatively low set pressure, which is the pressure before an internal explosion occurs.

The venting disk 120 is coupled to the bracket member 110 by being positioned above the gas discharge flow path 111 so as to shield the gas discharge flow path 111.

The gas discharge flow path 111 includes a first flow path 111A having a flow path cross-sectional area continuously or sequentially decreasing along the gas discharge direction, and a second flow path 111B formed consecutively with the first flow path and having a flow path cross-sectional area continuously or sequentially increasing along the gas discharge direction. Thus, by forming two flow paths with different flow path cross-sections in succession, the present invention can discharge a large amount of gas by increasing the outlet flow rate while excluding the choking phenomenon as described below, and can improve flow stability by preventing the generation of shock waves.

In general, a battery pack is equipped with a plurality of battery modules, each of which contains a plurality of secondary batteries. These secondary batteries generate gas due to the decomposition reaction of the electrolyte as they are repeatedly charged and discharged. The heat generated during the charging and discharging process of the battery cells promotes the generation of gas, which expands and increases the pressure inside the battery module or battery pack. If this process continues, the battery module or battery pack may explode, or the gas inside may enter the interior of a vehicle or the like through a duct, so a venting device is attached to discharge the gas by rupturing the venting disk 120 when the pressure of the gas reaches a certain limit.

As mentioned earlier, conventional gas venting devices simply have a cylindrical-shaped gas discharge flow path with a gas inlet and outlet connected to it, so the pressure difference between the inlet and outlet is not large, which limits the flow rate of gas that can be discharged.

In this regard, the gas discharge flow path 111 of the present invention has a first flow path 111A whose flow path cross-sectional area decreases continuously or sequentially along the gas discharge direction, and a second flow path 111B formed in succession to the first flow path and whose flow path cross-sectional area increases continuously or sequentially along the gas discharge direction.

As in the first flow path 111A, when the cross-sectional area of the gas discharge flow path 111 decreases, the internal pressure increases as the velocity of the gas decreases at the inlet 112 of the first flow path with a large cross-sectional area, and the internal pressure decreases as the velocity of the gas increases at the outlet of the first flow path with a small cross-sectional area. As a result, the pressure difference between the inlet and outlet of the first flow path 111A is locally increased, and a larger flow rate of gas can be discharged even if a venting disk of the same area is used. Accordingly, when the internal pressure caused by the gas generated inside the battery module or battery pack exceeds the standard value, the safety of the battery module and the battery pack can be improved by quickly discharging the gas. In other words, the first flow path 111A having a reduced cross-sectional area of the present invention can increase the gas discharge flow rate by increasing the pressure difference at the inlet and outlet of the first flow path 111A, compared to the conventional cylindrical flow path.

Meanwhile, in addition to the conventional cylindrical flow path, a so-called choking phenomenon can also occur in the case of a flow path in which cross-sectional area is reduced as shown in the first flow path above. As mentioned above, in order to discharge a large volume of gas, a larger pressure difference between the inlet and outlet of the flow path is advantageous. However, no matter how large the pressure difference between the inlet and outlet is designed, the maximum gas flow rate that can be reached at the outlet of a reduced cross-sectional area flow path such as the first flow path is limited to the speed of sound (M=1). That is, in the subsonic region, where the gas flow rate is below the speed of sound, the gas is considered incompressible and the gas flow rate increases as the cross-sectional area of the gas discharge flow path decreases. However, in the case of subsonic flow, no matter how large the pressure difference is, the gas flow rate at the outlet of the flow path cannot exceed the speed of sound due to the laws of physics.

Because of this, even if the pressure difference between the inlet and outlet is kept increasing, once the outlet flow rate reaches the speed of sound, a so-called choking phenomenon in which the flow rate and flow of the gas at the outlet stagnates can occur.

In order to solve this choking phenomenon and further increase the outlet flow rate, the present invention provides a second flow path 111B with an increased flow path cross-sectional area connected to the first flow path 111A.

If the flow rate at the outlet of the first flow path 111A reaches the speed of sound and the cross-sectional area of the flow path is increased again, such as in the second flow path 111B, the gas exhibits the behavior of a so-called compressible gas and, unlike the first flow path, flows at supersonic speeds with the flow rate increasing with the cross-sectional area of the flow path. In other words, the gas flow rate that was stagnant at the outlet of the first flow path 111A is further increased by the increase in cross-sectional area in the second flow path 111B and flows at speeds exceeding the speed of sound. Therefore, according to the present invention, by forming a first flow path 111A with a decreasing cross-sectional area and a second flow path 111B with an increasing cross-sectional area in succession, the present invention can solve the choking and finally increase the gas flow rate at the outlet 113 of the gas discharge flow path, i.e., the outlet of the second flow path 111B, so that a large amount of gas can be discharged.

In addition, the present invention has the advantage of mitigating or eliminating the generation of shock waves as in the prior art.

Referring to FIG. 2, in a conventional gas discharge flow path, the gas flow rate at the outlet is not high, resulting in a shock wave near the outlet. The shock wave is an irreversible loss of flow energy and is accompanied by a sharp increase in pressure at the outlet rear. This increase in pressure at the outlet consequently reduces the inlet-outlet pressure difference, which hinders gas discharge.

On the other hand, as shown in FIG. 4, in the case of the present invention with a flow path of decreasing and increasing cross-sectional area, the outlet flow rate is very large, reaching supersonic speeds, and the inertia of the flow at such high speeds causes shock waves to occur far from the outlet. In light of the recent dangers of battery ignition and explosion, it is important to design the flow path so that these shock waves are avoided within the region of interest of the flow. The present invention provides for a first and second flow path 111A, 111B with different cross-sections, so that shock waves can be formed away from the outlet 113. Furthermore, since the flow energy of the gas is lost in this process, the intensity of the resulting shock wave is much smaller, as shown by the dotted line in FIG. 4, or in some cases, it may dissipate into the atmosphere without generating a shock wave.

Accordingly, the present invention does not cause a localized pressure increase at the outlet as in the prior art.

In conclusion, according to the present invention, it is possible to overcome the choking phenomenon and discharge a large amount of gas by increasing the pressure difference between the inlet 112 and the outlet 113 of the gas discharge flow path 111, while obtaining a relatively stable gas flow without generating a shock wave at the outlet, and improving safety.

Moreover, the rupture pressure of the venting disk 120 can also be set to be relatively high because the pressure difference can be large.

The shape, length, cross-sectional area size, cross-sectional area change rate, etc. of the first flow path 111A and the second flow path 111B constituting the gas discharge flow path of the present invention can be appropriately changed and selected according to the design specifications such as the type, number, and arrangement structure of the secondary battery installed in the battery module and the battery pack. In other words, depending on the design specifications of the secondary battery, the heat transfer situation, flame generation situation, temperature, and pressure occurring in the battery module or pack will vary. In addition, the number of battery modules installed in the battery pack and the arrangement structure need to be considered.

Thus, various specifications of the gas discharge flow path 111 of the present invention, such as shape, length, cross-sectional area, and the like, can be determined by considering the various parameters described above.

The shape, length, cross-sectional area size, and cross-sectional area change rate, etc. of these gas discharge flow paths 111 will be discussed later.

Meanwhile, the venting disk 120 is installed in the gas discharge flow path 111 of the bracket member 110 so as to shield the gas discharge flow path 111. In theory, the venting disk 120 can be installed in any part of the path of the first flow path 111A and the second flow path 111B. In practice, the venting disk 120 can be installed at the most appropriate location by considering the pressure or flow rate, cross-sectional area, flow path shape, and ease of installation depending on the location of the gas discharge flow path.

Examples of desirable locations for a typical venting disk 120 include the following, whereby the first and second examples are not covered by the claims of the present invention:
First, the venting disk 120 can be installed in a throat portion T, which is the boundary between the first flow path 111A and the second flow path 111B.

The throat portion T forms the cross-sectional area where the subsonic behavior changes to supersonic behavior, so it is necessary to determine the cross-sectional area of this throat portion T first when designing the flow path. If the venting disk 120 is installed in the throat portion T, the area of the venting disk 120 and the rupture pressure range can be designed relatively accurately by considering the cross-sectional area at the throat portion T. In particular, the flow in the throat portion T is stable compared to the inlet and outlet of the gas discharge flow path 111, and the design is based on such a stable portion, so it is advantageous that the design accuracy of the venting disk 120 can be further improved.

In addition, there is less pressure variation before and after the throat portion T, so there is less chance of inadvertently breaking the venting disk 120 before it reaches the set pressure.

Second, the venting disk 120 can be installed at the inlet 112 side of the gas discharge flow path 111. Installing it on the "inlet side" includes both installing it at the inlet 112 of the first flow path 111A forming the gas discharge flow path 111 and installing it on a portion adjacent to the inlet. Furthermore, it includes the case of installing the venting disk 120 in an additional flow path when the additional flow path is formed inside the gas venting device 100 that precedes the first flow path 111A.

In this case, it can effectively protect the venting disk 120 from external pressure. It is also useful for protecting critical components such as secondary battery components and module components inside the venting disk 120.

In addition, if only the shape of the throat portion T described above is determined for the flow path shape, the total flow rate is not highly dependent on the size of the inlet, so it is easy to select the specification of the venting disk 120 installed at the inlet of the gas discharge flow path 111. In other words, if the shape of the throat portion T and the flow path is determined within the range that can achieve the effect of increasing the flow rate due to pressure changes at the inlet and outlet, the area of the inlet and the size of the venting disk 120 installed therein can be designed appropriately. Therefore, installing a venting disk 120 at the inlet 132 has the advantage of providing greater design freedom.

Third, the venting disk 120 is installed at the outlet of the gas discharge flow path 111, that is, at the outlet 113 side of the second flow path.

If the venting disk 120 is installed at the inlet 112 of the flow path or in the throat portion T, if it ruptures, the ruptured pieces can block the flow path or flow into the module and cause interference. This can impair the flow stability of the flow path. Installing the venting disk 120 at the outlet 133 of the flow path reduces this risk and contributes to flow stability.

Since the venting disk 120 is located on the outlet side of the flow path 113, there are no obstructions in the flow path from the inlet to the outlet side. As a result, since the flow path gets connected to the outside after the gas flow in the gas discharge flow path 111 becomes fully developed, this further improves the flow stability of the flow path, and enables a stable discharge of the discharging gas.

Furthermore, by installing the venting disk 120 on the outlet 113 side of the gas discharge flow path 111, the venting disk 120 can be easily replaced from outside the flow path in the event of damage.

As described above, the venting disk 120 can be installed at the inlet of the first flow path 111A (inlet 112 of the gas discharge flow path), at the outlet of the second flow path 111B (outlet 113 of the gas discharge flow path), or at the throat portion T, which is a boundary between the outlet of the first flow path and the inlet of the second flow path. Of course, depending on the flow path design, the venting disk 120 can be installed in other locations.

However, as described above, installing the venting disk 120 at the inlet, outlet, or throat portion of the first flow path has its own advantages. In addition, in terms of ease of coupling of the venting disk 120 to the bracket member 110, it is preferable to install the venting disk at the inlet or outlet side of the gas discharge flow path. That is, by placing the venting disk 120 at the inlet or outlet side of the gas discharge flow path 111, the gas venting device 100 can be easily assembled, for example, by contacting the venting disk with the corresponding mating surface of the bracket member 110 and fastening it with a fastening member.

On the other hand, when the bracket member 110 is coupled to the venting disk 120 in the throat portion T, it is necessary to process the shape of the bracket member 110 or the gas discharge flow path 111 separately to provide a place for the venting disk 120 to be coupled.

Therefore, in the present invention, the venting disk 120 is installed on the outlet side of the gas outlet flow path 111, that is, the outlet 113 side of the first flow path 111A, in order to enlarge the coupling area of the venting disk 120 and the bracket member 110 while simplifying the processing of the bracket member 110. Furthermore, by installing the venting disk 120 on the outlet side of the gas exhaust flow path 111, in the event of a rupture of the venting disk 120, the ruptured pieces can be removed out of the flow path by flow path pressure. Accordingly, it is possible to prevent the ruptured pieces from blocking the flow path or flowing into the interior of the module and causing interference. Furthermore, by installing the venting disk 120 on the outlet 113 side of the flow path, the flow path is connected to the outside after the gas flow in the gas discharge flow path 111 is fully developed, as the venting disk 120 does not obstruct the flow of the flow path. Accordingly, the flow stability of the flow path is ensured and the gas can be stably discharged.

Hereinafter, an embodiment will be described in which the venting disk is installed on the outlet side of the gas discharge flow path, that is, on the outlet 113 side of the second flow path 111B.

The length, shape, cross-sectional area size, and cross-sectional area change rate of the first flow path 111A and the second flow path 111B can be appropriately designed in consideration of the design specifications of the secondary battery, battery module, and battery pack, required safety, gas flow stability, etc.

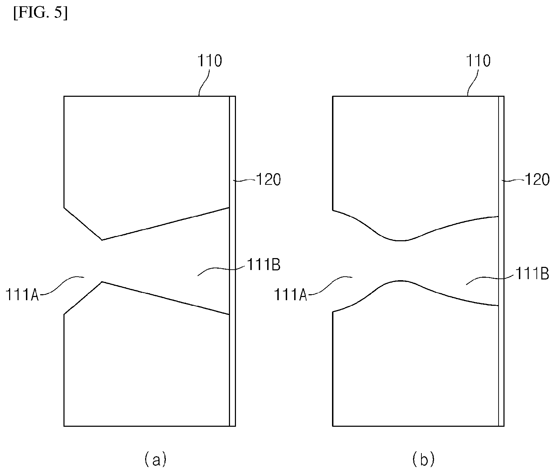

FIGS. 5 through 7 are diagrams illustrating flow path shapes of gas venting devices according to various exemplary embodiments.

The length of the overall gas venting flow path, or the length of the first flow path 111A and the second flow path 111B, can be determined by considering the gas discharge pressure, the flow path cross-sectional area, the size of the module or the pack, etc.

For example, as shown in FIGS. 3 and 4, the first flow path 111A and the second flow path 111B may be configured to have the same length. This case is applicable when the change in gas flow rate is relatively simple, and it makes it easy to process the bracket member 110.

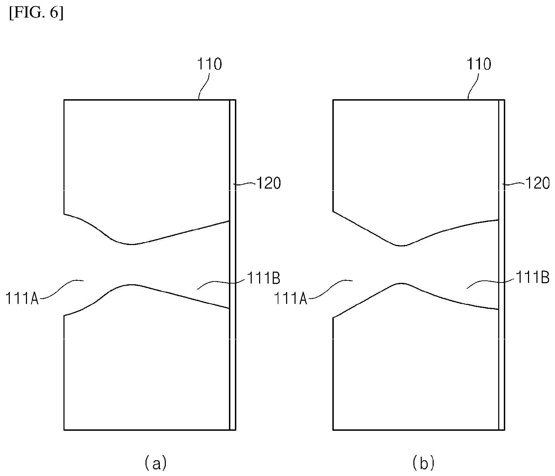

However, it is also possible to vary the length of the first flow path 111A and the second flow path 111B, as in FIGS. 5 and 6. In particular, it is possible to shorten the length of the first flow path 111A in the subsonic region and lengthen the length of the second flow path 111B in the supersonic region. By shortening the first flow path and lengthening the second flow path, the choking of the throat portion T can be quickly solved, and gas can be discharged from the outlet while the supersonic flow of the second flow path 111B is sufficiently developed. By increasing the flow inertia of the discharging gas, the shock wave generating region can be formed further away from the outlet.

The first flow path 111A has a flow path cross-sectional area that decreases continuously or sequentially along the gas discharge direction. In consideration of the case where the cross-sectional area of the flow path decreases continuously, the cross-sectional profiles of the both side portions of the first flow path 111A form a tapered shape that approaches each other in the gas discharge direction. Here, the both side portions of the flow path refer to the sides on either side forming the inner wall of the flow path, not the inlet and outlet sides forming the upper and lower portions of the flow path.

In addition, when the cross-sectional area of the second flow path 111B increases continuously along the gas discharge direction, the cross-sectional profiles of the both side portions of the second flow path form a tapered shape that moves away from each other toward the gas discharge direction.

In addition to the length of the first and second flow paths, the slope of the tapered profile of the cross-sectional profiles of the both side portions can also be determined differently depending on the design goal. That is, if the flow change is relatively simple or if the venting path is short, the slope of the tapered shape of the first and second flow paths can be set to be the same, as shown in FIGS. 3 and 4. On the other hand, if the flow change is complex, the slope of the tapered shape of the first flow path can be made larger than the slope of the tapered shape of the second flow path from the perspective of preventing choking and shock waves, as shown in FIGS. 5 and 6.

Meanwhile, the cross-sectional profiles of the both side portions are not limited to a linear tapered shape, but may include a curved tapered shape. For example, as shown in FIG. 5(a), the cross-sectional profiles of the first and second flow paths may be all linear tapered shape, or as shown in FIG. 5(b), they may be all curved tapered shape. Alternatively, the cross-sectional profile of the both side portions of the first flow path 111A and the second flow path 111B may be a mixture of linear and curved lines. That is, the cross-sectional profile of the first flow path 111A may be curved and the cross-sectional profile of the second flow path 111B may be linear, as shown in FIG. 6(a). Alternatively, the cross-sectional profiles of the first and second flow paths may be linear-curved, as shown in FIG. 6(b).

Furthermore, the cross-sectional profile may be composed of a partial mixture of linear and curved lines within each of the first flow path 111A and the second flow path 111B. Importantly, the cross-sectional area condition of the overall flow path must satisfy a continuous or sequential decrease (first flow path) and increase (second flow path).

In addition, the curvature of the curve can be set differently for each flow path, or even within a single flow path, along the gas discharge direction. For example, the curved tapered flow path of FIGS. 5 and 6 has a concave curved shape from the center of the flow path toward the flow path inner wall, but it is also possible to configure a curved flow path with a convex protruding shape from the flow path inner wall toward the center of the flow path.

In this way, configuring the cross-sectional profile of the both side portions of the flow path with a mixture of linear and curved lines, or with different curvatures of the lines, has the following effects:
For example, if the cross-sectional profile of the flow path is only linear, it is easy to manufacture because of its simplicity, but when connected to other parts such as pipes, an angled part may occur on the wall of the flow path, causing some flow instability. In addition, since the cross-sectional area reduction rate is constant, if a gas with unstable flow is introduced, for example, at the inlet of the flow path, the unstable flow of the gas is not likely to be solved and maintained until the outlet of the flow path. In other words, a flow path with a constant cross-sectional area decrease or increase rate has a disadvantage of having less freedom to control the flow instability within the flow path.

In this regard, it is advantageous that the flow instability described above can be controlled or managed within the flow path if the cross-sectional area reduction rate varies along the flow path (e.g., the cross-sectional profile of the two side portions is a mixture of linear and curved lines, or the curvature of the curves is different). For example, the shape of the first and second flow paths or the profiles of the two side portions are different as shown in FIG. 6, even if the flow in the first flow 111A is unstable, the flow can be stabilized by appropriately designing the shape of the second flow path 111B. In this way, by designing different shapes of the first and second flow paths, or by designing different shapes or different cross-sectional profiles within a single flow path, the gas flow within the flow path can be adjusted, thereby increasing the design freedom for controlling flow stability.

Furthermore, as described above, the length of the first and second flow paths, as well as the slope of the tapered shape, can be adjusted to further increase the design freedom for controlling flow stability.

Meanwhile, the gas discharge flow path 111 may be designed to have the shape of the cross-section perpendicular to the gas discharge direction to be circular, as shown in FIG. 3. In this case, the three-dimensional shape of the gas discharge flow path 141 may be a truncated conical shape. Accordingly, the shapes of the inlet 112 of the first flow path 111A, the cross-section of the throat portion T, and the outlet 113 of the second flow path 111B of the gas discharge flow path 141 may also be circular.

Here, the first flow path 111A of the gas discharge flow path 111 has a first truncated conical shape 111C, wherein the cross-sectional profiles of the both side portions are formed in a linear or curved tapered shape. In addition, the second flow path 111B has a second truncated conical shape 111D, wherein the cross-sectional profiles of the both side portions are formed in a linear or curved tapered shape.

Specifically, in the gas discharge flow path 111 of FIG. 5, the outer peripheral surface of the first and second truncated conical shapes forming the first and second flow paths, respectively, has a linear or curved cross-sectional profile.

In addition, in the gas discharge flow path of FIG. 6, the outer peripheral surface of the first truncated conical shape forming the first flow path has a curved (FIG. 6(a)) or linear (FIG. 6(b)) cross-sectional profile, and the outer peripheral surface of the second truncated conical shape forming the second flow path has a linear (FIG. 6(a)) or curved (FIG. 6(b)) cross-sectional profile.

By changing or mixing the cross-sectional profiles of the first and second truncated conical shapes 111C, 111D, the flow stability as described above can be more effectively controlled.

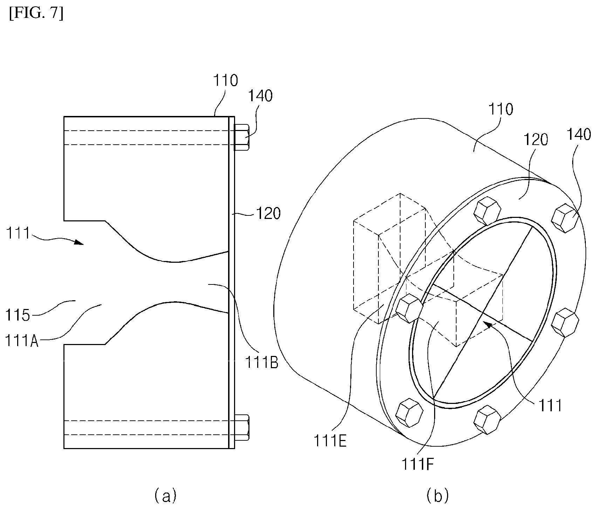

In FIGS. 4 through 6, the cross-sectional shape perpendicular to the gas discharge direction is circular, with the first and second flow paths each forming a truncated conical shape. However, the cross-sectional shape is not limited to a circular shape and may have a rectangular cross-sectional shape as shown in FIG. 7.

In other words, to the extent that the conditions of decreasing and increasing the cross-sectional area of the first flow path and the second flow path, respectively, are satisfied, it is also possible to adopt a flow path having a rectangular cross-sectional shape in the direction perpendicular to the gas discharge flow path, as shown in FIG. 7. Referring to FIG. 7, the first flow path 111A has a first truncated pyramid 111E shape with a tapered cross-sectional profile on both sides, and the second flow path 111B has a second truncated pyramid 111F shape with a tapered cross-sectional profile on both sides. In the gas discharge flow path of FIG. 7, the first truncated pyramid 111E and the second truncated pyramid 111F have a trapezoidal cross-sectional profile on both side portions of the flow path. A gas discharge flow path having such a rectangular cross-sectional shape can also be appropriately employed for design purposes or for adjustment of flow stability.

As such, a flow path having a rectangular (square) rather than a circular cross-sectional shape perpendicular to the gas discharge direction, i.e., a flow path in which the three-dimensional shape of the flow path forms a truncated pyramid, is applicable not only to FIG. 7 but also to flow paths having a cross-sectional profile of the both side portions of the same shape as in FIGS. 5 and 6.

As shown in the cross-sectional view of FIG. 7(a) and the perspective view of FIG. 7(b), a linear flow path 115 can be further formed on the inner side of the gas discharge flow path 111, that is, on the inner side of the first flow path 111A, if necessary. When the linear flow path 115 is added in this way, the flux flow inside the gas venting device 100 can be stably directed to the first flow path 111A. Furthermore, in the case of a bracket member 110 including a linear flow path 115, it may be advantageous in terms of processibility, as it is easy to introduce a tool for processing the flow path into the interior of the bracket member 110.

The linear flow path 115 is rectangular in cross-sectional shape perpendicular to the gas discharge direction, but a circular flow path, that is, a flow path having a cylindrical shape in three dimensions, is also possible.

Furthermore, such a linear flow path 115 can be applied to the inlet side of the truncated conical flow paths of FIGS. 4 through 6, in addition to the truncated pyramid flow paths shown in FIG. 7.

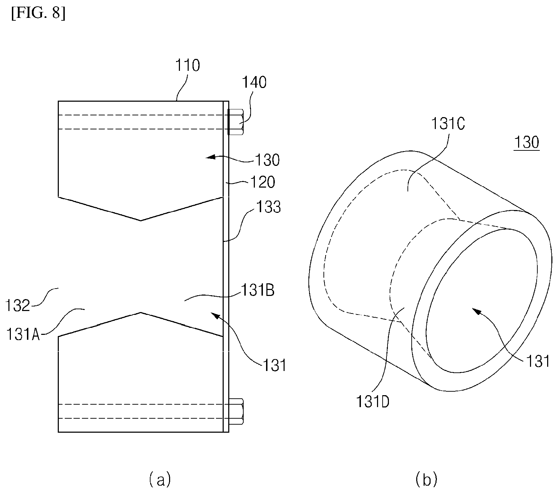

FIG. 8 is a diagram of a gas venting device according to another exemplary embodiment of the present invention, wherein FIG. 8(a) is a schematic cross-sectional view, and FIG. 8(b) is a perspective view of a discharge guide 130, which is a component of the gas venting device.

In FIGS. 3 to 7, the through hole itself of the bracket member 110 is formed as a gas discharge flow path 111 including a first flow path 111A and a second flow path 111B.

However, in this case, it is difficult to easily change the flow path shape according to changes in product specifications, and in order to change the flow path, it is inconvenient in that the bracket member 110 itself has to be replaced with a bracket member with a different flow path shape.

According to the claimed invention and as shown in the embodiment of FIG. 8, the purpose of the present invention is achieved by inserting a discharge guide 130 having a gas discharge flow path 131 formed through the through hole of the bracket member 110. That is, according to the claimed invention, gas discharge flow paths including the first and second flow paths are formed through the discharge guide 130, and the discharge guide 130 is coupled to a through hole of the bracket member 110, and a venting disk 120 is coupled to the bracket member 110 and the discharge guide 130 at the inlet 132 side of the gas discharge flow path 131 of the discharge guide 130. As shown in FIG. 8, the gas discharge flow path 131 of the discharge guide 130 is formed in the form in which a first flow path 131A in the shape of a first truncated conical 131C shape and a second flow path 131B in the shape of a second truncated conical 131D shape, with the directions of the tapered cross-sectional profile of the both sides portions are opposite to each other, are formed consecutively.

The discharge guide 130 is a removable or replaceable structure. As such, according to the claimed invention, the bracket member 110 is provided with a separate discharge guide 130 having a gas discharge flow path 131 to facilitate the discharge of gases, allow for easy replacement of parts, and make it easy to change the shape of the flow path. In this case, the description of the length, slope and shape of the gas discharge flow path 111 described above with reference to FIGS. 4 to 7 is equally applicable to the gas discharge flow path 131 of the discharge guide 130.

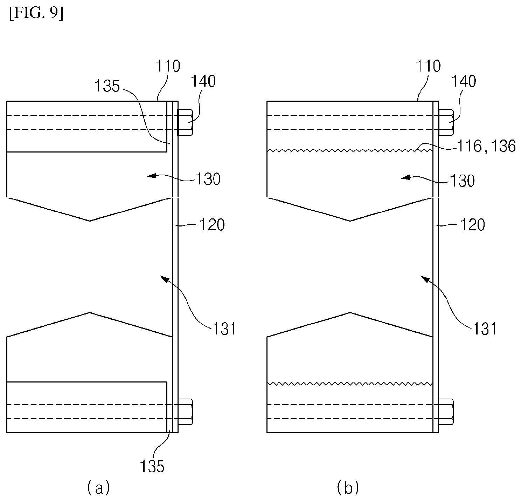

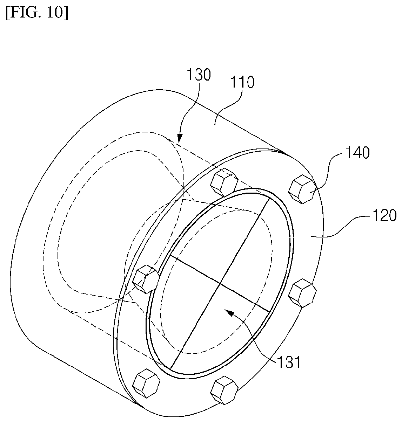

FIGS. 9 and 10 are diagrams illustrating the fastening structure of a gas venting device of the present invention.

Referring to FIG. 9, the discharge guide 130 has a fastening portion 135 formed on its outer peripheral surface for fastening the discharge guide 130 to the bracket member 110. For example, the bracket member and the discharge guide 130 may be fastened by a fastening member 140, such as bolts. In this case, as shown in FIG. 9(a), a fastening member 140 may be protruding on the outer peripheral surface of the discharge guide 130 for fastening the discharge guide to the bracket member 110. The discharge guide has to be inserted into the through hole in the bracket member, so that its cross-section corresponds to the shape of the through hole. In addition, the fastening portion 135 may form plate-type protrusions protruding along its outer peripheral portions in a shape similar to the outer periphery of the venting disk 120. In the fastening portion 135, a fastening hole (not shown) for bolting together with the bracket member is formed. The fastening hole formed in the fastening portion 135 is formed in the same position as the fastening hole formed in the bracket member, and is fixed by inserting a bolt.

Meanwhile, the positions at which the fastening portions 135 are formed may be suitably designed. For example, as shown in FIG. 9(a), the fastening portion 135 may be formed to be positioned between the bracket member and the venting disk 120. Alternatively, the fastening portion 135 may be formed to contact the other side of the side on which the bracket member contacts the venting disk 120.

In another example, the bracket member 110 and the discharge guide 130 may be fastened in a screw fastening. In this case, threads 116,136 for screwing may be correspondingly formed on the inner wall of the through hole of the bracket member 110 and on the outer peripheral surface of the discharge guide, respectively. Accordingly, the bracket member 110 and the discharge guide 130 may be fastened in the same manner as nuts and bolts are fastened. In this way, when the discharge guide 130 is fastened to the bracket member 110 in a screw fastening method, the structure and fastening method of the parts are simplified, and the discharge guide 130 can be strongly fixed to the bracket member 110. However, even in this case, a separate fastening member 140 is required to fasten the bracket member 110 and the venting disk 120.

The shape of the gas discharge flow path 111, 131 formed in the bracket member 110 or the discharge guide 130 can be designed in various forms depending on the safety standards of the battery pack, etc.

In addition, the cross-sectional area of the throat portion T of the gas discharge flow paths 111,131 may be appropriately selected according to the structure of the battery module and battery pack or the safety conditions to be achieved, but may be between 20% and 80% of the cross-sectional area of the inlet of the gas discharge flow path (inlet 112, 132 of the first flow path). More specifically, the cross-sectional area of the throat portion may be 20% to 40%, or 40% to 60%, or 60% to 80%, or even more specifically, 55% to 65% of the cross-sectional area of the inlet.

The cross-sectional area of the outlet 113, 133 of the gas discharge flow path 111, 131 (outlet of the second flow path) may be the same as or different from the cross-sectional area of the inlet.

Furthermore, patterns (not shown) may be formed on the inner walls of the gas discharge flow paths 111,131 to aid in gas discharge. For example, the pattern may be threaded, embossed, or protruded with a pattern of linear lines parallel to the gas discharge direction. Specifically, the pattern may be in the form of threaded protrusions along the inner wall of the flow path that wrap around the inside of the flow path. Such a pattern may accelerate the discharge of the gas.

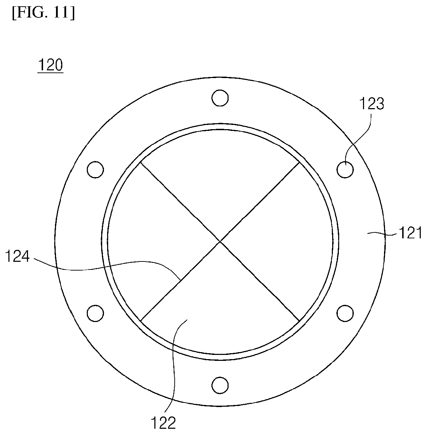

FIG. 11 is a schematic diagram illustrating the shape of a venting disk 120 according to the present invention.

The venting disk 120 includes a disk outer peripheral portion 121 that is fastened to the bracket member 110; and a disk inner peripheral portion 122 that is formed integrally with the disk outer peripheral portion 121, shields the through hole, but ruptures when a predetermined pressure is applied.

The disk outer peripheral portion 121 is a portion for fixing the bracket member 110 and the venting disk 120. The disk outer peripheral portion 121 may be provided with a bolt through hole 123 along the circumferential direction, and the bracket member 110 and the disk outer peripheral portion 121 may be integrally coupled through a bolting method or the like.

The disk inner peripheral portion 122 may be made of a metal or plastic material that is capable of rupturing when a predetermined pressure is applied. For example, the disk inner peripheral portion 122 may be formed of a metal or plastic material such as copper, aluminum, or stainless steel with a small thickness. In case of rupturing, the disk inner peripheral portion 122 may be suitably selected to match the pressure conditions.

Under normal conditions, the disk inner peripheral portion 122 prevents moisture or foreign matter from penetrating into the interior of the battery module or battery pack by blocking the through holes formed in the bracket member or the first bracket 110A and the second bracket 110B. However, when a large amount of gas is generated in the battery module or battery pack, the internal pressure rises, and this pressure acts as a force to rupture the disk inner peripheral portion 122. At this time, the pressure inside the battery module or battery pack is higher than the air pressure outside, so the gas inside can be discharged to the outside of the battery module or battery pack by negative pressure.

A notch 124 are formed in the disk inner peripheral portion 122 to rupture when a predetermined pressure is applied. This notch 124 is formed by partially cutting the surface of the venting disk 120 in the thickness direction. The shape of the notch 124 can be designed as a cross shape, a circular shape, a quadrilateral shape, a U-shape, an oval shape, an arc shape, or the like, and the cross-section of the notch 124 can be a trapezoid, a V-shape, a quadrilateral shape, an arc, or the like. The shape of the notch 124 formed in the disk inner peripheral portion 122 is not necessarily limited thereto and may have various shapes. For example, the shape of the notch 124 may be an X-shape, as shown in FIG. 11. In this case, when the disk inner peripheral portion 122 ruptures, the ruptured fragment of the disk inner peripheral portion 122 may not completely break off and may be coupled to the disk outer peripheral portion 121. If the ruptured fragment of the disk inner peripheral portion completely separates from the venting disk and falls off, it can be difficult to remove and can damage other components.

In addition, the bracket member 110 and the venting disk 120 may be interposed with a disk pad (not shown). These disk pads have a shape corresponding to the disk outer peripheral portion 121, and may be annular or ring-shaped. The disk pad is intended to increase the airtightness between the bracket member 110 and the venting disk 120, and to prevent damage of the disk outer peripheral portion 121. For example, the disk pad may be formed of an elastic rubber material or the like.

In addition, the present invention provides a battery module that includes the gas venting device described above.

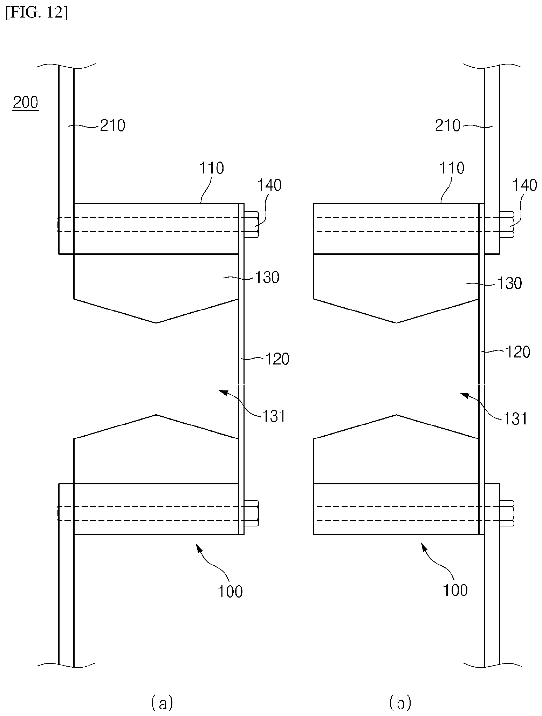

FIG. 12 is a schematic diagram illustrating the coupling structure of a gas venting device in a battery module according to an exemplary embodiment of the present invention.

Referring to FIG. 12, a battery module 200 according to the present invention includes a plurality of secondary batteries (not shown); and a module frame 210 on which the secondary batteries are mounted, wherein the above-mentioned gas venting device 100 is fastened to one side of the module frame 210.

Specifically, the secondary battery has a form in which an electrode assembly with alternately stacked positive electrodes, negative electrodes, and separators mounted within a cell case with an electrolyte. The configuration of such a secondary battery is self-explanatory to a person of ordinary skill in the art to which the present invention belongs, and a more detailed description is therefore omitted.

In one example, the gas venting device 100 may be fastened with the bracket member 110 abutting the outer surface of the module frame 210, as shown in FIG. 12(a), or may be fastened with the bracket member 110 abutting the inner surface of the module frame 210, as shown in FIG. 12(b). In the specification of the present invention, the inner surface of the module frame 210 refers to the surface of the module frame 210 facing the interior space in which the secondary battery is mounted, and the outer surface refers to the surface of the module frame 210 exposed to the outside. In the module frame 210, the bracket member 110, a fastening hole formed in a fastening portion (not shown) of the discharge guide 130, and a hole corresponding to the fastening hole (bolt through holes) of the venting disk 120 are formed, so that the bracket member 110, the venting disk 120, the discharge guide 130 can be fixed to the module frame 210 through a single bolt fastening. Furthermore, the module frame 210 may have a hole with a size corresponding to the through hole formed in the bracket member 110, or an inlet of the gas discharge flow path 131 formed in the discharge guide 130, so that the gas generated in the module may be discharged.

Meanwhile, the battery module 200 may further include a sealing member (not shown) that provides a seal between the module frame 210 and the periphery of the gas venting device 100. The sealing member may be a rubber ring or silicone resin, and may be installed in the gap between the gas venting device and the module frame to seal the battery module.

As shown in FIG. 12, when the venting disk 120 is installed on the outlet 113 side,133 of the gas discharge flow path 111,131 of the gas venting device 100 or the discharge guide, even if the venting disk 120 ruptures, the ruptured fragments can be discharged directly out of the flow path 111,131. Thus, contamination of the flow path by the fragments can be easily prevented. Furthermore, in the event of a rupture of the venting disk 120, the venting disk 120 can be easily replaced from outside the module frame 210. Furthermore, the present invention has the advantage that the venting disk 120 is disposed on the outlet side of the flow path, and there is no structure inside the flow path that obstructs the flow. Therefore, the flow in the flow path can be sufficiently developed, so that the gas can be discharged as designed, thereby ensuring the stability of the flow path.

In addition, the present invention provides a battery pack including a gas venting device as previously described.

A battery pack according to the invention includes: at least one battery module having a plurality of secondary batteries; and a battery pack case in which the battery module is mounted, wherein one side of the battery pack case may be fastened with a gas venting device as previously described.

In this case, the gas venting device may be fastened to the battery pack case in the same manner as the coupling of the module frame to the gas venting device described above.

That is, the gas venting device may be such that the bracket member 110 is coupled to an inner surface or an outer surface of the battery pack case.

Similarly, the battery pack may include a sealing member that seals between the battery pack case and the outer periphery of the gas venting device.

According to the above, the gas venting device according to the present invention, and the battery module and the battery pack equipped with it has a sealed inside, so that when the pressure inside exceeds a reference value, the venting disk ruptures and the gas inside the battery pack is discharged to the outside.

The present invention adopts two consecutive flow paths in which the cross-sectional area of the gas discharge flow path is continuously or sequentially reduced in the gas discharge direction and then increased again. Accordingly, this overcomes the conventional limitation in which a choking phenomenon occurs due to the outlet flow rate being only subsonic, and the outlet flow rate of the gas discharge flow path can be made to be supersonic or higher, so that a larger flow rate of gas can be discharged.

In addition, as described above, the flow stability of the gas at the outlet is greatly improved, and the occurrence of shock waves can be reduced or prevented.

In particular, the present invention achieves the unique effects described above by installing a venting disk on the outlet side of the gas discharge flow path.

While the present invention has been particularly described with reference to exemplary embodiments, it will be understood by those of skilled in the art that various changes in form and details may be made without departing from the scope of the present invention. Therefore, the embodiments disclosed above and in the accompanying drawings should be considered in a descriptive sense only and not for purposes of limitation. The scope of the present invention is defined not by the detailed description of the present invention but by the appended claims.

Meanwhile, in this specification, terms indicating directions such as up, down, left, right, front, and back are used, and it should be clear that these terms are for convenience of description only, and may vary depending on the position of the object or the position of the observer.

## Claims

1. A gas venting device (100) comprising:
a hollow bracket member (110) with a gas discharge flow path (131); and
a venting disk (120) coupled to the bracket member to shield the gas discharge flow path, and configured to rupture when a predetermined pressure is applied to the venting disk; wherein the gas discharge flow path (131) comprises:
a first flow path (131A) that continuously or sequentially decreases in flow path cross-section along the gas discharge direction, and
a second flow path (131B) formed consecutively with the first flow path (131A) and having a flow path cross-section that increases continuously or sequentially along the gas discharge direction, **characterised in that**
the venting disk (120) is installed on the outlet side of the gas discharge flow path,
wherein
the bracket member (110) has a through hole, and comprises
a discharge guide (130) inserted within the through hole and having a gas discharge flow path (131) formed therethrough, wherein
the venting disk (120) is coupled to the bracket member (110) and the discharge guide (130) at the outlet side of the gas discharge flow path (131) of the discharge guide (130) to shield the gas discharge flow path.

2. The gas venting device of claim 1, wherein
the first and second flow paths (131A, 131B) are of the same or different lengths.

3. The gas venting device of claim 1, wherein
the cross-sectional profiles of the both side portions of the first flow path (131A) are formed in a tapered shape approaching each other along the gas discharge direction, and
the cross-sectional profiles of the both side portions of the second flow path (131B) are formed in a tapered shape moving away from each other along the gas discharge direction.

4. The gas venting device of claim 3, wherein
a slope of the tapered shape of the first flow path (131A) and a slope of the tapered shape of the second flow path (131B) are the same or different.

5. The gas venting device of claim 3, wherein
the cross-sectional profiles of the both side portions of the first and second flow paths (131A, 131B) are formed in a linear or curved tapered shape.

6. The gas venting device of claim 5, wherein
the first flow path (131A) has a first truncated conical shape in which the cross-sectional profiles of the both side portions are formed in a linear or curved tapered shape, and
the second flow path (131B) has a second truncated conical shape in which the cross-sectional profiles of the both side portions are formed in a linear or curved tapered shape.

7. The gas venting device of claim 3, wherein
the first flow path (131A) has a first truncated pyramid shape in which the cross-sectional profiles of the both side portions are formed in a tapered shape, and
the second flow path (131B) has a second truncated pyramid shape in which the cross-sectional profiles of the both side portions are formed in a tapered shape.

8. The gas venting device of claim 7, wherein
the first truncated pyramid shape and the second truncated pyramid shape has a truncated square pyramid shape having a trapezoidal cross-sectional profile.

9. The gas venting device of claim 1, wherein
a flow path having a linear cross-sectional profile on both side portions is connected to the inlet side of the first flow path.

10. The gas venting device of claim 1, wherein
a fastening portion is formed on the outer peripheral surface of the discharge guide for fastening the discharge guide to the bracket member.

11. The gas venting device of claim 1, wherein
the bracket member and the discharge guide are coupled together by a screw fastening method.

12. The gas venting device of claim 1, wherein
the venting disk comprises:
a disk outer peripheral portion coupled to the bracket member; and
a disk inner peripheral portion formed in one piece with the disk outer peripheral portion, shielding the gas discharge flow path, and rupturing when a predetermined pressure is applied to the disk inner peripheral portion; wherein
a notch is formed in the disk inner peripheral portion to rupture when the predetermined pressure is applied to the disk inner peripheral portion.

13. A battery module comprising:
a plurality of secondary batteries; and
a module frame on which the plurality of secondary batteries are mounted, wherein
the gas venting device according to any one of claims 1 to 12 is coupled to one side of the module frame.

14. The battery module of claim 13, further comprising
a sealing member providing an airtight seal between the module frame and the outer periphery of the gas venting device.

15. A battery pack comprising:
at least one battery module having a plurality of secondary batteries; and a battery pack case in which the battery module is mounted; wherein
the gas venting device according to any one of claims 1 to 12 is coupled to one side of the battery pack case.

## Patentansprüche

1. Gasentlüftungsvorrichtung (100), umfassend:
ein hohles Halterungselement (110) mit einem Gasentladungsströmungsweg (131); und
eine Entlüftungsscheibe (120), welche an das Halterungselement gekoppelt ist, um den Gasentladungsströmungsweg abzuschirmen, und dazu eingerichtet ist, zu reißen, wenn ein vorbestimmter Druck auf die Entlüftungsscheibe ausgeübt wird;
wobei der Gasentladungsströmungsweg (131) umfasst:
einen ersten Strömungsweg (131A), welcher sich kontinuierlich oder sequenziell in einem Strömungsweg-Querschnitts entlang der Gasentladungsrichtung verringert, und
einen zweiten Strömungsweg (131B), welcher aufeinanderfolgend mit dem ersten Strömungsweg (131A) gebildet ist und einen Strömungsweg-Querschnitt aufweist, welcher sich kontinuierlich oder sequenziell entlang der Gasentladungsrichtung vergrößert,
**dadurch gekennzeichnet, dass**
die Entlüftungsscheibe (120) an der Auslassseite des Gasentladungsströmungswegs installiert ist,
wobei das Halterungselement (110) ein Durchgangsloch aufweist und eine Entladungsführung (130) umfasst, welche in das Durchgangsloch eingeführt ist und einen darin gebildeten Gasentladungsströmungsweg (131) aufweist,
wobei die Entlüftungsscheibe (120) an das Halterungselement (110) gekoppelt ist und die Entladungsführung (130) an der Auslassseite des Gasentladungsströmungswegs (131) der Entladungsführung (130) gekoppelt ist, um den Gasentladungsströmungsweg abzuschirmen.

2. Gasentlüftungsvorrichtung nach Anspruch 1,
wobei der erste und der zweite Strömungsweg (131A, 131B) von dergleichen oder unterschiedlicher Länge sind.

3. Gasentlüftungsvorrichtung nach Anspruch 1,
wobei die Querschnittsprofile der beiden seitlichen Abschnitte des ersten Strömungsweges (131A) in einer sich verjüngenden Form gebildet sind, welche sich entlang der Gasentladungsrichtung einander annähern,
und die Querschnittsprofile der beiden seitlichen Abschnitte des zweiten Strömungsweges (131B) in einer sich verjüngenden Form gebildet sind, welche sich entlang der Gasentladungsrichtung voneinander wegbewegen.

4. Gasentlüftungsvorrichtung nach Anspruch 3,
wobei eine Neigung der sich verjüngenden Form des ersten Strömungsweges (131A) und eine Neigung der sich verjüngenden Form des zweiten Strömungsweges (131B) dieselben oder unterschiedlich sind.

5. Gasentlüftungsvorrichtung nach Anspruch 3,
wobei die Querschnittsprofile der beiden seitlichen Abschnitte des ersten und des zweiten Strömungsweges (131A, 131B) in einer linearen oder gekrümmten, sich verjüngenden Form gebildet sind.

6. Gasentlüftungsvorrichtung nach Anspruch 5,
wobei der erste Strömungsweg (131A) eine erste abgestumpfte konische Form aufweist, in welcher die Querschnittsprofile der beiden seitlichen Abschnitte in einer linearen oder gekrümmten sich verjüngenden Form gebildet sind,
und der zweite Strömungspfad (131B) eine zweite abgestumpfte konische Form aufweist, in welcher die Querschnittsprofile der beiden seitlichen Abschnitte in einer linearen oder gekrümmten sich verjüngenden Form gebildet sind.

7. Gasentlüftungsvorrichtung nach Anspruch 3,
wobei der erste Strömungsweg (131A) eine erste abgestumpfte Pyramidenform aufweist, in welcher die Querschnittsprofile der beiden seitlichen Abschnitte in einer sich verjüngenden Form gebildet sind,
und der zweite Strömungsweg (131B) eine zweite abgestumpfte Pyramidenform aufweist, in welcher die Querschnittsprofile der beiden seitlichen Abschnitte in einer sich verjüngenden Form gebildet sind.

8. Gasentlüftungsvorrichtung nach Anspruch 7,
wobei die erste abgestumpfte Pyramidenform und die zweite abgestumpfte Pyramidenform eine abgestumpfte quadratische Pyramidenform mit einem trapezförmigen Querschnittsprofil aufweisen.

9. Gasentlüftungsvorrichtung nach Anspruch 1,
wobei ein Strömungsweg mit linearem Querschnittsprofil an beiden Seitenabschnitten mit der Einlassseite des ersten Strömungsweges verbunden ist.

10. Gasentlüftungsvorrichtung nach Anspruch 1,
wobei ein Befestigungsabschnitt an der äußeren peripheren Fläche der Entladungsführung gebildet ist, um die Entladungsführung an dem Halterungselement zu befestigen.

11. Gasentlüftungsvorrichtung nach Anspruch 1,
wobei das Halterungselement und die Entladungsführung durch ein Schraubbefestigungsverfahren miteinander gekoppelt sind.

12. Gasentlüftungsvorrichtung nach Anspruch 1,
wobei die Entlüftungsscheibe umfasst:
einen äußeren peripheren Scheibenabschnitt, welcher an das Halterungselement gekoppelt ist; und
einen inneren peripheren Scheibenabschnitt, welcher in einem Stück mit dem äußeren Scheibenabschnitt gebildet ist, welcher den Gasentladungsströmungsweg abschirmt und reißt, wenn ein vorbestimmter Druck auf den inneren peripheren Scheibenabschnitt ausgeübt wird;
wobei eine Nut in dem inneren peripheren Scheibenabschnitt gebildet ist, um zu reißen, wenn der vorbestimmte Druck auf den inneren peripheren Scheibenabschnitt ausgeübt wird.

13. Batteriemodul, umfassend:
eine Mehrzahl von Sekundärbatterien; und
einen Modulrahmen, an welchem die Mehrzahl der Sekundärbatterien montiert ist, wobei die Gasentlüftungsvorrichtung nach einem der Ansprüche 1 bis 12 mit einer Seite des Modulrahmens gekoppelt ist.

14. Batteriemodul nach Anspruch 13,
ferner umfassend ein Dichtungselement, welches eine luftundurchlässige Dichtung zwischen dem Modulrahmen und der äußeren Peripherie der Gasentlüftungsvorrichtung bereitstellt.

15. Batteriepack, umfassend:
wenigstens ein Batteriemodul mit einer Mehrzahl von Sekundärbatterien; und
ein Batteriepackgehäuse, in welchem das Batteriemodul montiert ist,
wobei die Gasentlüftungsvorrichtung nach einem der Ansprüche 1 bis 12 an eine Seite des Batteriepackgehäuses gekoppelt ist.

## Revendications

1. Dispositif de dispersion de gaz dans l'atmosphère (100) comprenant :
un organe support creux (110) doté d'un chemin d'écoulement d'évacuation de gaz (131) ; et
un disque de dispersion dans l'atmosphère (120) couplé à l'organe support pour protéger le chemin d'écoulement d'évacuation de gaz, et configuré pour se rompre lorsqu'une pression prédéterminée est appliquée au disque de dispersion dans l'atmosphère ; dans lequel le chemin d'écoulement d'évacuation de gaz (131) comprend :
un premier chemin d'écoulement (131A) qui diminue en continu ou en séquence en termes de section transversale de chemin d'écoulement le long de la direction d'évacuation de gaz, et
un second chemin d'écoulement (131B) formé de manière consécutive au premier chemin d'écoulement (131A) et ayant une section transversale de chemin d'écoulement qui augmente en continu ou en séquence le long de la direction d'évacuation de gaz, **caractérisé en ce que**
le disque de dispersion dans l'atmosphère (120) est installé sur le côté de sortie du chemin d'écoulement d'évacuation de gaz, dans lequel
l'organe support (110) possède un trou traversant, et comprend
un guide d'évacuation (130) inséré au sein du trou traversant et ayant un chemin d'écoulement d'évacuation de gaz (131) formé à travers celui-ci, dans lequel
le disque de dispersion dans l'atmosphère (120) est couplé à l'organe support (110) et au guide d'évacuation (130) au niveau du côté de sortie du chemin d'écoulement d'évacuation de gaz (131) du guide d'évacuation (130) pour protéger le chemin d'écoulement d'évacuation de gaz.

2. Dispositif de dispersion de gaz dans l'atmosphère selon la revendication 1, dans lequel
les premier et second chemins d'écoulement (131A, 131B) sont de longueurs identiques ou différentes.

3. Dispositif de dispersion de gaz dans l'atmosphère selon la revendication 1, dans lequel
les profils en section transversale des deux parties latérales du premier chemin d'écoulement (131A) sont formés selon une géométrie effilée se rapprochant l'un de l'autre le long de la direction d'évacuation de gaz, et
les profils en section transversale des deux parties latérales du second chemin d'écoulement (131B) sont formés selon une géométrie effilée s'éloignant l'un de l'autre le long de la direction d'évacuation de gaz.

4. Dispositif de dispersion de gaz dans l'atmosphère selon la revendication 3, dans lequel
une pente de la géométrie effilée du premier chemin d'écoulement (131A) et une pente de la géométrie effilée du second chemin d'écoulement (131B) sont identiques ou différentes.

5. Dispositif de dispersion de gaz dans l'atmosphère selon la revendication 3, dans lequel
les profils en section transversale des deux parties latérales des premier et second chemins d'écoulement (131A, 131B) sont formés selon une géométrie effilée linéaire ou incurvée.

6. Dispositif de dispersion de gaz dans l'atmosphère selon la revendication 5, dans lequel
le premier chemin d'écoulement (131A) possède une première géométrie conique tronquée dans laquelle les profils en section transversale des deux parties latérales sont formés selon une géométrie effilée linéaire ou incurvée, et
le second chemin d'écoulement (131B) possède une seconde géométrie conique tronquée dans laquelle les profils en section transversale des deux parties latérales sont formés selon une géométrie effilée linéaire ou incurvée.

7. Dispositif de dispersion de gaz dans l'atmosphère selon la revendication 3, dans lequel
le premier chemin d'écoulement (131A) possède une première géométrie de pyramide tronquée dans laquelle les profils en section transversale des deux parties latérales sont formés selon une géométrie effilée, et
le second chemin d'écoulement (131B) possède une seconde géométrie de pyramide tronquée dans laquelle les profils en section transversale des deux parties latérales sont formés selon une géométrie effilée.

8. Dispositif de dispersion de gaz dans l'atmosphère selon la revendication 7, dans lequel
la première géométrie de pyramide tronquée et la seconde géométrie de pyramide tronquée possèdent une géométrie de pyramide à base carrée tronquée ayant un profil en section transversale trapézoïdal.

9. Dispositif de dispersion de gaz dans l'atmosphère selon la revendication 1, dans lequel
un chemin d'écoulement ayant un profil en section transversale linéaire sur les deux parties latérales est raccordé au côté d'entrée du premier chemin d'écoulement.

10. Dispositif de dispersion de gaz dans l'atmosphère selon la revendication 1, dans lequel
une partie de fixation est formée sur la surface périphérique externe du guide d'évacuation pour la fixation du guide d'évacuation à l'organe support.

11. Dispositif de dispersion de gaz dans l'atmosphère selon la revendication 1, dans lequel
l'organe support et le guide d'évacuation sont couplés ensemble par un procédé de fixation par vis.

12. Dispositif de dispersion de gaz dans l'atmosphère selon la revendication 1, dans lequel
le disque de dispersion dans l'atmosphère comprend :
une partie périphérique externe de disque couplée à l'organe support ; et
une partie périphérique interne de disque formée d'un seul tenant avec la partie périphérique externe de disque, protégeant le chemin d'écoulement d'évacuation de gaz, et se rompant lorsqu'une pression prédéterminée est appliquée à la partie périphérique interne de disque ; dans lequel
une encoche est formée dans la partie périphérique interne de disque pour se rompre lorsque la pression prédéterminée est appliquée à la partie périphérique interne de disque.

13. Module de batterie comprenant :
une pluralité de batteries secondaires ; et
un cadre de module sur lequel la pluralité de batteries secondaires sont montées, dans lequel
le dispositif de dispersion de gaz dans l'atmosphère selon l'une quelconque des revendications 1 à 12 est couplé à un côté du cadre de module.

14. Module de batterie selon la revendication 13, comprenant en outre un organe d'étanchéité fournissant un joint étanche à l'air entre le cadre de module et la périphérie externe du dispositif de dispersion de gaz dans l'atmosphère.

15. Bloc-batterie comprenant :
au moins un module de batterie ayant une pluralité de batteries secondaires ; et un boîtier de bloc-batterie dans lequel le module de batterie est monté ; dans lequel
le dispositif de dispersion de gaz dans l'atmosphère selon l'une quelconque des revendications 1 à 12 est couplé à un côté du boîtier de bloc-batterie.
